# EUROPEAN PATENT APPLICATION

(11) **EP 4 415 130 A1**
(43) Date of publication of application: **14.08.2024**
(21) Application number: 22941021.2
(22) Date of filing: 09.05.2022
(51) Int. Cl.: H01M 50/167, H01M 10/04, B21D 19/12

(54) **DEVICE AND METHOD FOR PREPARING BATTERY CELL**

(71) Applicant: Contemporary Amperex Technology Co., Limited, Ningde, Fujian 352100 (CN)
(72) Inventor: PAN, Youcheng, Ningde, Fujian 352100 (CN); JIANG, Liang, Ningde, Fujian 352100 (CN); LUO, Zhixin, Ningde, Fujian 352100 (CN)
(74) Representative: Ran, Handong
(86) International application number: PCT/CN2022/091658
(87) International publication number: WO 2023/216053

(57) **Abstract**

Embodiments of the present application provide a device and method for preparing a battery cell. The device comprises: a roller moving mechanism for controlling a first roller to move towards the central axis of a battery cell, the battery cell comprising a shell and a cover plate, and the shell and the cover plate being sealably connected in a sealed manner and forming an edge-curled structure that turns outwards; and the first roller for pressing the edge-curled structure by means of a first processing surface when the roller moving mechanism controls the first roller to move towards the central axis of the battery cell, so that the edge-curled structure inclines towards the central axis of the battery cell. The device and method for preparing a battery cell in the embodiments of the present application can improve the processing efficiency and safety of a battery cell.

## Description

### TECHNICAL FIELD

The present application relates to the technical field of batteries, in particular to a device and method for manufacturing a battery cell.

### BACKGROUND

The key to the sustainable development of automobile industry is energy conservation and emission reduction. In this case, electric vehicles have become an important part in the sustainable development of automobile industry due to their advantages in energy conservation and environmental protection. For electric vehicles, the battery technology is an important factor that relates to their development.

In the development of battery technology, the safety is an issue that cannot be ignored, in addition to improving the battery performance. If the safety of batteries cannot be guaranteed, the batteries cannot be used. Therefore, how to enhance the safety of batteries while ensuring the processing efficiency of the batteries is an urgent technical problem to be solved in the battery technology.

### SUMMARY

Embodiments of the present application provide a device and method for manufacturing a battery cell, which can improve the processing efficiency and safety of the battery cell.

According to a first aspect, there is provided a device for manufacturing a battery cell, the device including: a roller moving mechanism, configured to control a first roller to move in a direction of a central axis of a battery cell, where the battery cell includes a case and a cover plate, the case and the cover plate being hermetically connected and forming a rolled edge structure that is turned outwards; and the first roller, having a first processing surface and configured to squeeze, when the roller moving mechanism controls the first roller to move in the direction of the central axis of the battery cell, the rolled edge structure by the first processing surface, to cause the rolled edge structure to be inclined in a direction close to the central axis of the battery cell.

Therefore, according to the device provided by the embodiment of the present application, when the roller moving mechanism controls the first roller to move in the direction of the central axis of the battery cell, the first processing surface of the first roller squeezes the rolled edge structure, to cause the rolled edge structure to be inclined in the direction close to the central axis of the battery cell, such that the rolled edge structure can be compacted and inclined in the direction close to the central axis of the battery cell, thereby improving the pressure resistance and sealing effect of the rolled edge structure.

In some embodiments, the first roller is located on one side, away from the central axis of the battery cell, of the rolled edge structure. A stiffener is arranged on one side, close to the central axis of the battery cell, of the rolled edge structure, and the first roller is arranged on the other side of the rolled edge structure, such that the first processing surface of the first roller can squeeze the rolled edge structure, to cause the rolled edge structure to be in contact with the stiffener.

In some embodiments, the device further includes a roller rotating mechanism, configured to control the first roller to rotate about the central axis of the battery cell. In view of that the rolled edge structure between the case and the cover plate generally surrounds the battery cell, when the first roller is controlled by the roller rotating mechanism to rotate about the central axis of the battery cell, the first processing surface of the first roller can be in contact with different regions of the rolled edge structure, such that the regions of the rolled edge structure can be uniformly stressed to uniformly deform, thereby improving the processing efficiency of the rolled edge structure.

In some embodiments, the roller rotating mechanism is configured to control, when the roller moving mechanism controls the first roller to move in the direction of the central axis of the battery cell, the first roller to rotate about the central axis of the battery cell, to increase a processing speed.

In some embodiments, the battery cell further includes a stiffener arranged on one side, away from an interior of the battery cell, of the cover plate; and the first roller is configured to squeeze the rolled edge structure, to cause the rolled edge structure to be inclined in the direction close to the central axis of the battery cell, and to cause at least part of the stiffener to be located between an inner side of the rolled edge structure and the cover plate.

The rolled edge structure is squeezed towards the stiffener, such that at least part of the stiffener is accommodated between the rolled edge structure and the cover plate. In this way, when the interior of the battery cell expands to increase a pressure on the cover plate, the stiffener can resist at least part of the pressure, such that a pressure directly acting on the rolled edge structure is reduced, that is, the pressure resistance of the rolled edge structure is improved, thereby improving the processing efficiency and safety performance of the battery cell.

In some embodiments, the first processing surface includes an inclined surface with an inclination direction consistent with that of a first surface of the stiffener, where the first surface is a surface, in contact with the rolled edge structure, of the stiffener, such that the rolled edge structure can be uniformly stressed between the inclined surface and the first surface, and the rolled edge structure can be deformed more uniformly, thereby enhancing the strength of the rolled edge structure.

In some embodiments, a first press head is configured to restrict the movement of the stiffener of the battery cell in a first plane perpendicular to the central axis of the battery cell. The first press head can restrict the movement of the stiffener on the first plane, thereby avoiding the uneven structural strength of the rolled edge structure due to the inconsistency in deformation of different regions of the rolled edge structure thanks to the dislocation of the stiffener.

In some embodiments, the first processing surface is an inner surface of a groove surrounding the first roller, such that there is always the first processing surface for squeezing the rolled edge structure in the process that the first roller rotates about the central axis of the battery cell.

In some embodiments, the stiffener is annular, and the first press head is arranged on an inner side of the stiffener, such that the first press head is in contact with a second surface, close to the central axis of the battery cell, of the stiffener, to fix and restrict the movement of the stiffener along the first plane perpendicular to the central axis of the battery cell.

In some embodiments, an angle between a surface, in contact with the stiffener, of the first press head and the central axis of the battery cell ranges from 0° to 10°, to improve the stability of the first press head and the stiffener.

In some embodiments, the device further includes a second roller, having a second processing surface, where the roller moving mechanism is further configured to control the second roller to move in the direction of the central axis of the battery cell; and the second roller is configured to squeeze and wind, when the roller moving mechanism controls the second roller to move in the direction of the central axis of the battery cell, a first edge portion of the cover plate and a second edge portion of the case by the second processing surface, to form the rolled edge structure. The rolled edge structure can be formed through winding under the squeezing of the second roller, and this process is simple and easy to implement.

In some embodiments, the device further includes a second press head in contact with the first surface of the stiffener of the battery cell, where the stiffener is arranged on one side, away from the interior of the battery cell, of the cover plate, the first surface is a surface, facing the rolled edge structure, of the stiffener, and the second press head is configured to restrict the relative movement between the stiffener and the cover plate, so as to form the rolled edge structure between the second processing surface and the second press head.

In some embodiments, the device further includes a press head moving mechanism, configured to control, before the case and the cover plate form the rolled edge structure, the second press head to squeeze the stiffener towards the interior of the battery cell along the direction of the central axis of the battery cell, such that at least part of the cover plate is accommodated in an opening of the case, and the first edge portion is in contact with the second edge portion.

The first press head and the second press head can be configured to not only restrict the movement of the stiffener, but also squeeze the cover plate, to cause the first edge portion of the cover plate to be quickly merged with the second edge portion of the case, which contributes to accelerating the formation of the rolled edge structure.

In some embodiments, the press head moving mechanism is further configured to control, when the second press head is controlled to leave the battery cell, the first press head not to leave the battery cell, to provide a space for deformation of the rolled edge structure.

In some embodiments, the second roller is located on an outer side of the battery cell, such that the second processing surface of the second roller causes the battery cell to form a rolled edge structure that is wound anticlockwise. Moreover, the second roller is located on the outer side of the battery cell, such that an arrangement position of the stiffener is not affected, and the stiffener does not need to be moved continuously in different processing procedures, thereby improving the processing efficiency.

In some embodiments, the roller rotating mechanism is further configured to control the second roller to rotate about the central axis of the battery cell, to cause the first edge portion and the second edge portion to be uniformly stressed and deformed, so as to form a uniform rolled edge structure.

In some embodiments, the roller rotating mechanism is configured to control, when the roller moving mechanism controls the second roller to move in the direction of the central axis of the battery cell, the second roller to rotate about the central axis of the battery cell, to accelerate the formation of an annular rolled edge structure surrounding a circumference of the battery cell.

In some embodiments, the roller moving mechanism is further configured to: control, when the first roller is controlled to move till the first processing surface is in contact with the battery cell, the second roller to move till the second processing surface is not in contact with the battery cell; and control, when the second roller is controlled to move till the second processing surface is in contact with the battery cell, the first roller to move till the first processing surface is not in contact with the battery cell. This can avoid an influence of the second processing surface on the rolled edge structure when the first processing surface squeezes the rolled edge structure, and an influence of the second processing surface on the rolled edge structure when the second processing surface winds the case and the cover plate to form the rolled edge structure.

In some embodiments, the second processing surface is an inner surface of a groove surrounding the second roller. Such the annular second processing surface facilitates that there is always the second processing surface for squeezing and bending the first edge portion and the second edge portion in the process that the second roller rotates about the central axis of the battery cell, to form the rolled edge structure.

In some embodiments, the battery cell is a cylinder, and the first roller is a cylinder.

In some embodiments, the device includes a plurality of first rollers uniformly distributed along the circumferential direction of the battery cell, such that different regions of the rolled edge structure are stressed more uniformly.

According to a second aspect, there is provided a method for manufacturing a battery cell, where the battery cell includes a case and a cover plate, the case and the cover plate being hermetically connected and forming a rolled edge structure that is turned outwards; and the method includes: controlling a first roller to move in a direction of a central axis of the battery cell, and squeezing the rolled edge structure by a first processing surface of the first roller, to cause the rolled edge structure to be inclined in a direction close to the central axis of the battery cell.

In some embodiments, the method further includes: controlling the first roller to rotate about the central axis of the battery cell.

In some embodiments, the controlling the first roller to rotate about the central axis of the battery cell includes: controlling, when the first roller is controlled to move in the direction of the central axis of the battery cell, the first roller to rotate about the central axis of the battery cell.

In some embodiments, the battery cell further includes a stiffener arranged on one side, away from an interior of the battery cell, of the cover plate; and the squeezing the rolled edge structure by a first processing surface of the first roller, to cause the rolled edge structure to be inclined in a direction close to the central axis of the battery cell includes: squeezing the rolled edge structure by the first processing surface of the first roller, to cause the rolled edge structure to be inclined in the direction close to the central axis of the battery cell, and to cause at least part of the stiffener to be located between an inner side of the rolled edge structure and the cover plate.

In some embodiments, the method further includes: restricting, by a first press head, the movement of the stiffener of the battery cell in a first plane perpendicular to the central axis of the battery cell.

In some embodiments, the method further includes: controlling a second roller to move in the direction of the central axis of the battery cell, and squeezing and winding a first edge portion of the cover plate and a second edge portion of the case by a second processing surface of the second roller, to form the rolled edge structure.

In some embodiments, the method further includes: enabling a second press head to be in contact with a first surface of the stiffener of the battery cell, and restricting the relative movement between the stiffener and the cover plate, where the stiffener is arranged on one side, away from the interior of the battery cell, of the cover plate, and the first surface is a surface, facing the rolled edge structure, of the stiffener.

In some embodiments, the method further includes: controlling, before the case and the cover plate form the rolled edge structure, the second press head to squeeze the stiffener towards the interior of the battery cell along the direction of the central axis of the battery cell, such that at least part of the cover plate is accommodated in an opening of the case, and the first edge portion is in contact with the second edge portion.

In some embodiments, the method further includes: controlling, when the second press head is controlled to leave the battery cell, the first press head not to leave the battery cell.

In some embodiments, the method further includes: controlling the second roller to rotate about the central axis of the battery cell.

In some embodiments, the controlling the second roller to rotate about the central axis of the battery cell includes: controlling, when the second roller is controlled to move in the direction of the central axis of the battery cell, the second roller to rotate about the central axis of the battery cell.

In some embodiments, the method further includes: controlling, when the first roller is controlled to move till the first processing surface is in contact with the battery cell, the second roller to move till the second processing surface is not in contact with the battery cell; and controlling, when the second roller is controlled to move till the second processing surface is in contact with the battery cell, the first roller to move till the first processing surface is not in contact with the battery cell.

### BRIEF DESCRIPTION OF THE DRAWINGS

FIG. 1 is a schematic structural diagram of a vehicle disclosed by an embodiment of the present application;
FIG. 2 is a schematic side view of a battery cell disclosed by an embodiment of the present application;
FIG. 3 is a schematic sectional view of a battery cell disclosed by an embodiment of the present application;
FIG. 4 is a schematic block diagram of a device for manufacturing a battery cell disclosed by an embodiment of the present application;
FIG. 5 is a schematic block diagram of another device for manufacturing a battery cell disclosed by an embodiment of the present application;
FIG. 6 is a schematic block diagram of yet another device for manufacturing a battery cell disclosed by an embodiment of the present application;
FIG. 7 is a schematic partial structural diagram of a rolled edge structure of a battery cell processed by a device for manufacturing a battery cell disclosed by an embodiment of the present application;
FIG. 8 is a schematic partial top view of a rolled edge structure of a battery cell processed by a device for manufacturing a battery cell disclosed by an embodiment of the present application;
FIG. 9 is a schematic partial sectional view of a rolled edge structure of a battery cell processed by a device for manufacturing a battery cell disclosed by an embodiment of the present application;
FIG. 10 is another schematic partial sectional view of a rolled edge structure of a battery cell processed by a device for manufacturing a battery cell disclosed by an embodiment of the present application;
FIG. 11 is yet another schematic partial sectional view of a rolled edge structure of a battery cell processed by a device for manufacturing a battery cell disclosed by an embodiment of the present application;
FIG. 12 is yet another schematic partial sectional view of a rolled edge structure of a battery cell processed by a device for manufacturing a battery cell disclosed by an embodiment of the present application;
FIG. 13 is a schematic partial sectional view of a battery cell disclosed by an embodiment of the present application; and
FIG. 14 is a schematic flowchart of a method for manufacturing a battery cell disclosed by an embodiment of the present application.

In the accompanying drawings, the accompanying drawings are not drawn in actual scale.

### DETAILED DESCRIPTION OF THE EMBODIMENTS

The implementations of the present application are further described in detail below with reference to the accompanying drawings and the embodiments. The detailed description of the following embodiments and the accompanying drawings are used to exemplarily illustrate the principles of the present application, but not to limit the scope of the present application, that is, the present application is not limited to the embodiments described.

In the description of the present application, it should be noted that, unless otherwise noted, "a plurality of means two or more; and orientations or positional relationships indicated by the terms "upper", "lower", "left", "right", "inner", "outer", and the like are only for the convenience of describing the present application and simplifying the description rather than indicating or implying that the device or element referred to must have a particular orientation or be constructed and operated in a particular orientation, and thus cannot be construed as limiting the present application. In addition, the terms "first", "second", "third", and the like are only for descriptive purposes and cannot be construed as indicating or implying relative importance. "Vertical" is not strictly vertical, but within an allowable error range. "Parallel" is not strictly parallel, but within an allowable error range.

Orientation words appearing in the following description are all directions shown in the drawings and do not limit the specific structure of the present application. In the description of the present application, it should also be noted that, unless otherwise expressly specified and limited, the term "mounted", "connected", or "connection" should be understood in a broad sense, for example, it may be fixed connection, detachable connection, or integrated connection; moreover, it may be directly connected or indirectly connected through an intermediate medium. The specific meanings of the above terms in the present application may be understood by those of ordinary skill in the art depending on specific circumstances.

In the embodiments of the present application, the same reference signs denote the same components, and for simplicity, detailed descriptions of the same components are omitted in different embodiments. It should be understood that the thicknesses, lengths, widths, and other dimensions of various components in the embodiments of the present application shown in the accompanying drawings and the overall thickness, length, width, and other dimensions of an integrated device are illustrative only and should not constitute any limitation to the present application.

In the present application, the battery cell may include a lithium-ion secondary battery, a lithium-ion primary battery, a lithium-sulfur battery, a sodium and lithium-ion battery, a sodium-ion battery, or a magnesium-ion battery, which is not limited in the embodiments of the present application. A shape of the battery cell may be a cylinder, a flat body, a cuboid, or another shape, which also is not limited in the embodiments of the present application. The battery cell generally includes a cylindrical battery cell, a prismatic battery cell, and a pouch battery cell according to encapsulation modes, which also is not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a case for encapsulating one or more battery cells. The case can prevent liquids or other foreign objects from affecting the charging or discharging of the battery cells.

The battery cell includes an electrode assembly and an electrolyte, where the electrode assembly includes a positive plate, a negative plate, and a separator. The battery cell operates mainly relying on the movement of metal ions between the positive plate and the negative plate. The positive plate includes a positive current collector and a positive active material layer, where the positive active material layer coats a surface of the positive current collector, and the positive current collector not coated with the positive active material layer protrudes from the positive current collector coated with the positive active material layer and serves as a positive tab. By using the lithium-ion battery as an example, a material of the positive current collector may be aluminum, and the positive active material may be lithium cobaltate, lithium iron phosphate, ternary lithium, or lithium manganate. The negative plate includes a negative current collector and a negative active material layer, where the negative active material layer coats a surface of the negative current collector, and the negative current collector not coated with the negative active material layer protrudes from the negative current collector coated with the negative active material layer and serves as a negative tab. A material of the negative current collector may be copper, and the negative active material may be carbon or silicon. To ensure that there is no fusing when a high current passes, there are multiple positive tabs stacked together and multiple negative tabs stacked together. A material of the separator may be polypropylene (PP) or polyethylene (PE). In addition, the electrode assembly may have a wound structure or a laminated structure, and the embodiments of the present application are not limited thereto.

In the development of battery technology, it is required to consider various design factors simultaneously, such as an energy density, a cycle life, a discharge capacity, a charge/discharge rate, and other performance parameters, and also to consider the processing efficiency and safety of the battery. For the battery, the main safety hazard comes from charging and discharging processes. For example, in the charging and discharging processes, the battery cell has a temperature rise and expands to increase the internal pressure of the battery cell, such that the sealing between the cover plate and the case needs to have a certain strength to ensure that the battery cell is not prone to failure. Therefore, how to improve the processing efficiency and safety of the battery cell is an urgent problem to be solved at present.

In view of this, an embodiment of the present application provides a device for manufacturing a battery cell, including a roller moving mechanism and a first roller. The battery cell includes a case and a cover plate, the case and the cover plate being hermetically connected and forming a rolled edge structure that is turned outwards; and when the roller moving mechanism controls the first roller to move in a direction of a central axis of the battery cell, a first processing surface of the first roller squeezes the rolled edge structure, to cause the rolled edge structure to be inclined in a direction close to the central axis of the battery cell. Under the squeezing of the first roller, the rolled edge structure can be compacted and inclined in the direction close to the central axis of the battery cell, thereby improving the pressure resistance and sealing effect of the rolled edge structure.

The technical solutions described in the embodiments of the present application are all applicable to various power consuming devices using batteries.

The power consuming devices may be a vehicle, a mobile phone, a portable device, a laptop, a ship, a spacecraft, an electric toy, and an electric tool. The vehicle may be a fuel vehicle, a gas vehicle, or a new energy vehicle, where the new energy vehicle may be a battery electric vehicle, a hybrid vehicle, or an extended-range vehicle; the spacecraft includes an airplane, a rocket, a space shuttle, or a spaceship; the electric toy includes a stationary or mobile electric toy, such as a game machine, an electric car toy, an electric ship toy, or an electric airplane toy; and the electric tool includes an electric metal cutting tool, an electric grinding tool, an electric assembly tool, or an electric railway tool, such as an electric drill, an electric grinder, an electric wrench, an electric screwdriver, an electric hammer, an electric impact drill, a concrete vibrator, or an electric planer. The above power consuming devices are not specially limited in the embodiments of the present application.

For ease of description of the embodiments below, an example where a power consuming device refers to a vehicle is used for description.

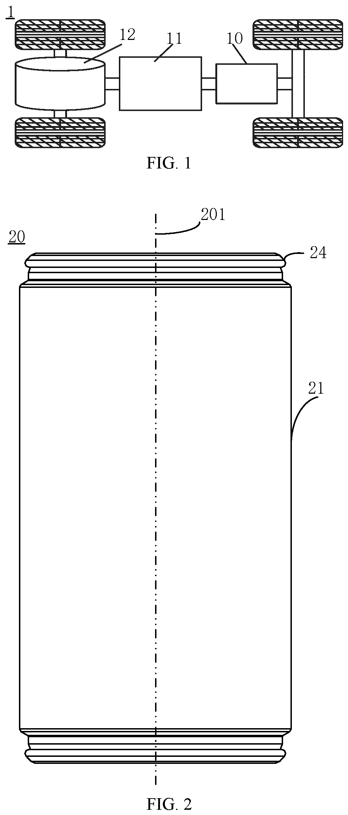

For example, as shown in FIG. 1 which is a schematic structural diagram of a vehicle 1 according to an embodiment of the present application, the vehicle 1 may be a fuel vehicle, a gas vehicle, or a new energy vehicle, where the new energy vehicle may be a battery electric vehicle, a hybrid electric vehicle, or an extended-range vehicle. A motor 12, a controller 11, and a battery 10 can be arranged inside the vehicle 1, where the controller 11 is configured to control the battery 10 to supply power to the motor 12. For example, the battery 10 can be arranged at a bottom, a front, or a rear of the vehicle 1. The battery 10 may be configured to supply power to the vehicle 1, for example, the battery 10 may be used as a power supply for operating the vehicle 1; and the battery may be used for a circuit system of the vehicle 1, for example, the battery may be used to meet power consuming requirements during starting, navigation and operation of the vehicle 1. In another embodiment of the present application, the battery 10 may not only be used as a power supply for operating the vehicle 1, but also be used as a power supply for driving the vehicle 1, replacing or partially replacing fuel or natural gas, to provide driving power for the vehicle 1.

To meet different power consuming requirements, the battery may include multiple battery cells, where the multiple battery cells can be connected in series, in parallel, or in series and parallel, and "connected in series and parallel" refers to combination of series connection and parallel connection. The battery may also be referred to as a battery pack. Optionally, the multiple battery cells can first be connected in series, in parallel, or in series and parallel to form battery modules, and then the multiple battery modules can be connected in series, in parallel, or in series and parallel to form the battery. That is to say, the multiple battery cells can directly form the battery, or they can first form the battery modules and then the battery modules form the battery.

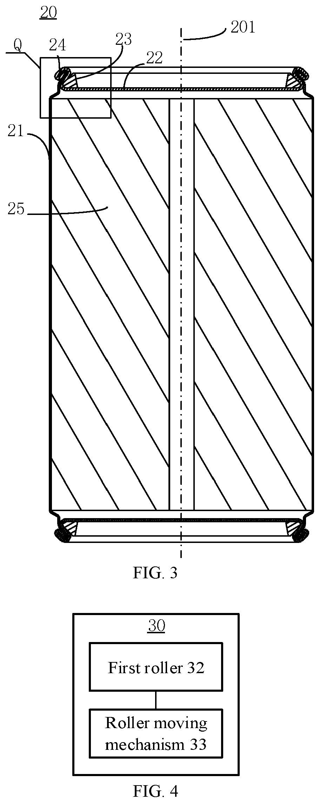

FIG. 2 shows a schematic diagram of a battery cell 20 according to an embodiment of the present application; FIG. 3 shows a schematic cross-sectional view of a battery cell 20 according to an embodiment of the present application, where FIG. 3 may be a possible schematic cross-sectional view of the battery cell 20 shown in FIG. 2, and the schematic cross-sectional view may be a schematic cross-sectional view of the battery cell 20 as shown in FIG. 2 along a plane passing through a central axis 201 of the battery cell 20; and FIG. 4 shows a schematic block diagram of a device 30 for manufacturing a battery cell 20 according to an embodiment of the present application, where the device 30 can be configured to manufacture the battery cells as shown in FIG. 2 and FIG. 3. Specifically, referring to FIG. 2 to FIG. 4, the device 30 provided by the embodiment of the present application may include: the roller moving mechanism 33, configured to control the first roller 32 to move in the direction of the central axis 201 of the battery cell 20, where the battery cell 20 includes the case 21 and the cover plate 22, the case 21 and the cover plate 22 being hermetically connected and forming the rolled edge structure 24 that is turned outwards; and the first roller 32, having the first processing surface 321 and configured to squeeze, when the roller moving mechanism 33 controls the first roller 32 to move in the direction of the central axis 201 of the battery cell 20, the rolled edge structure 24 by the first processing surface 321, to cause the rolled edge structure 24 to be inclined in the direction close to the central axis 201 of the battery cell 20.

In the embodiment of the present application, the case 21 and the cover plate 22 being hermetically connected and forming the rolled edge structure 24 that is turned outwards refers to that the rolled edge structure 24 is located outside the battery cell 20, that is, the case 21 and the cover plate 22 are merged and turned towards an exterior of the battery cell to form the rolled edge structure 24.

It should be understood that in the embodiment of the present application, the first roller 32 is connected to the roller moving mechanism 33, such that the roller moving mechanism 33 can control the first roller 32 to move. For example, the roller moving mechanism 33 can be directly or indirectly connected to the first roller 32, but the embodiment of the present application is not limited thereto.

Therefore, according to the device 30 provided by the embodiment of the present application, when the roller moving mechanism 33 controls the first roller 32 to move in the direction of the central axis 201 of the battery cell 20, the first processing surface 321 of the first roller 32 squeezes the rolled edge structure 24, to cause the rolled edge structure 24 to be inclined in the direction close to the central axis 201 of the battery cell 20. Under the squeezing of the first roller 32, the rolled edge structure 24 can be compacted and inclined in the direction close to the central axis 201 of the battery cell 20, thereby improving the pressure resistance and sealing effect of the rolled edge structure 24.

Optionally, as an embodiment, the battery cell 20 in the embodiment of the present application may further include a stiffener 23 arranged on one side, away from an interior of the battery cell 20, of the cover plate 22. Specifically, as shown in FIG. 2 to FIG. 4, in the embodiment of the present application, the case where the stiffener 23 is arranged on one side, away from the interior of the battery cell 20, of the cover plate 22 may include a case where the stiffener 23 is directly arranged on a surface, away from the interior of the battery cell 20, of the cover plate 22, or a case where the stiffener 23 is indirectly arranged on a surface, away from the interior of the battery cell 20, of the cover plate 22 by another component. For example, another component such as an adhesive or other fixing structures can be arranged between the stiffener 23 and the cover plate 22, but the embodiment of the present application is not limited thereto.

Optionally, the first roller 32 in the embodiment of the present application is further configured to squeeze the rolled edge structure 24, to cause the rolled edge structure 24 to be inclined in the direction close to the central axis 201 of the battery cell 20, and to cause at least part of the stiffener 23 to be located between an inner side of the rolled edge structure 24 and the cover plate 22. Specifically, in the embodiment of the present application, the first processing surface 321 of the first roller 32 squeezes the rolled edge structure 24, to cause at least part of the stiffener 23 to be located between the inner side of the rolled edge structure 24 and the cover plate 22, where the inner side of the rolled edge structure 24 is one side, facing the central axis 201 of the battery cell 20, of the rolled edge structure 24. For example, under the squeezing of the first processing surface 321 of the first roller 32, at least partial region of the stiffener 23 can be in contact with a surface 241, facing the central axis 201 of the battery cell 20, of the rolled edge structure 24 and an outer surface of a cover plate main body portion 222.

Therefore, according to the device 30 provided by the embodiment of the present application, the rolled edge structure 24 is squeezed towards the stiffener 23, such that at least part of the stiffener 23 is accommodated between the rolled edge structure 24 and the cover plate 22. In this way, when the interior of the battery cell 20 expands to increase a pressure on the cover plate 22, the stiffener 23 can resist at least part of the pressure, such that a pressure directly acting on the rolled edge structure 24 is reduced, that is, the pressure resistance of the rolled edge structure 24 is improved, thereby improving the processing efficiency and safety performance of the battery cell 20.

For example, for a cylindrical battery cell with a diameter of 64 mm, if the stiffener 23 is not arranged, a compressive strength of the rolled edge structure is usually 0.8 Mpa to 0.9 Mpa only, while a compressive strength of a pressure release mechanism arranged by means of scoring is usually 1.7 Mpa, which is higher than the compressive strength of the rolled edge structure, such that when the internal pressure of the battery cell 20 exceeds an upper limit of the compressive strength of the rolled edge structure, the rolled edge structure will fail prior to the pressure release mechanism, to cause failure of the battery cell. The stiffener 23 added between the rolled edge structure 24 and the cover plate 22 can resist part of the pressure, and only when the stiffener 23 fails, the rolled edge structure 24 may fail, thereby improving the pressure resistance of the rolled edge structure 24; and the pressure release mechanism may fail prior to the rolled edge structure 24, thereby improving the safety of the battery cell 20.

It should be understood that the case 21 in the embodiment of the present application is a component configured to accommodate an electrode assembly 25, and may have a hollow structure with an opening formed in at least one end. For example, if the case 21 has a hollow structure with an opening formed in one end, one cover plate 22 can be arranged to cover the opening of the case 21. Alternatively, as shown in FIG. 2 to FIG. 5, if the case 21 has a hollow structure with openings formed in two opposite ends, two cover plates 22 can be arranged to cover the openings in the two ends of the case 21, respectively. In the embodiment of the present application, an example where the case 21 has a hollow structure with openings formed in two opposite ends is mainly used, that is, the case 21 has a hollow structure with openings in two ends, and the battery cell 20 includes two cover plates 22 configured to cover the openings in the two ends, respectively, such that the electrode assembly 25 can be assembled into the case 21 through any opening, and other components in the case 21 can also be conveniently assembled, thereby improving the assembly efficiency.

Optionally, the case 21 in the embodiment of the present application may be made of various materials, such as copper, iron, aluminum, steel, and aluminum alloy. The case 21 may be in various shapes, such as a cylinder and a cuboid. Exemplarily, in the accompanying drawings of the embodiment of the present application, the case 21 has a cylindrical structure.

The cover plate 22 in the embodiment of the present application is a component that covers the opening of the case 21 to isolate an internal environment of the battery cell 20 from an external environment. The cover plate 22 may also be made of various materials, such as copper, iron, aluminum, steel, and aluminum alloy. The materials of the cover plate 22 and the case 21 may be same or different.

It should be understood that the cover plate 22 can be matched in shape with the case 21. For example, when the case 21 has a cuboidal structure, the cover plate 22 may have a plate-shaped structure matched with the case 21, or may have a hollow cuboid structure with an opening 213 in one end, such that the cover plate 22 and the case 21 can be combined to form a cuboidal battery cell 20. For another example, as shown in FIG. 2 to FIG. 5, when the case 21 in the embodiment of the present application is a cylinder, the cover plate 22 may also be in a circular plate shape or may have a groove structure with a circular bottom wall, such that the cover plate 22 and the case 21 can be combined to form a cylindrical battery cell 20. An example where the cover plate 22 is in a circular plate shape is mainly used for description below, but the embodiment of the present application is not limited thereto.

For the battery cell 20, the case 21 and the cover plate 22 are hermetically connected and form the rolled edge structure 24, and the rolled edge structure 24 surrounds the opening of the case 21, that is, the rolled edge structure 24 is formed around the battery cell 20. For example, for the cylindrical battery cell 20, the rolled edge structure 24 is usually annular.

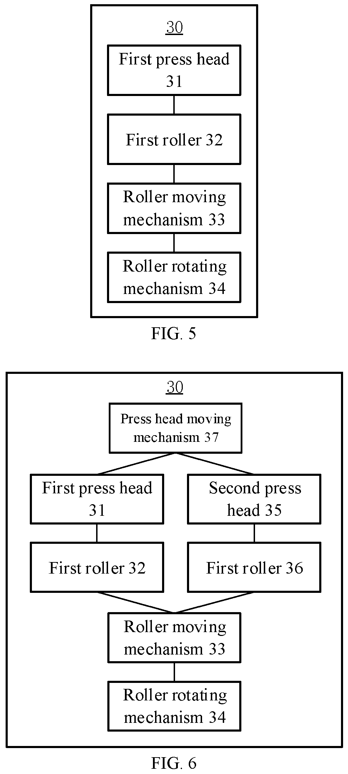

Optionally, FIG. 5 shows another schematic block diagram of a device 30 for manufacturing a battery cell 20 according to an embodiment of the present application, where the device 30 shown in FIG. 5 may also be configured to manufacture the battery cells as shown in FIG. 2 and FIG. 3. As shown in FIG. 5, compared with FIG. 4, the device 30 provided by the embodiment of the present application may further include a roller rotating mechanism 34, configured to control the first roller 32 to rotate about the central axis 201 of the battery cell 20. In view of that the rolled edge structure 24 between the case 21 and the cover plate 22 generally surrounds the battery cell 20, when the first roller 32 is controlled by the roller rotating mechanism 34 to rotate about the central axis 201 of the battery cell 20, the first processing surface 321 of the first roller 32 can be in contact with different regions of the rolled edge structure 24. For example, for an annular rolled edge structure 24, the first roller 32 can make contact with and squeeze regions of a circumferential surface of the rolled edge structure 24 during the rotation, such that the regions of the rolled edge structure 24 can be uniformly stressed to uniformly deform, thereby improving the processing efficiency of the rolled edge structure 24.

Optionally, as shown in FIG. 5, the device 30 provided by the embodiment of the present application may include a first press head 31, configured to restrict the movement of the stiffener 23 of the battery cell 20 in a first plane perpendicular to the central axis 201 of the battery cell 20. For example, the first plane may be a surface, facing the exterior of the battery cell 20, of the cover plate 22, that is, the first press head 31 can restrict the movement of the stiffener 23 on the surface of the cover plate 22, thereby avoiding the uneven structural strength of the rolled edge structure 24 due to the inconsistency in deformation of different regions of the rolled edge structure 24 thanks to the dislocation of the stiffener 23.

Optionally, the devices 30 as shown in FIG. 4 and FIG. 5 can squeeze the rolled edge structure 24, and may further be configured to process the case 21 and the cover plate 22, to form the rolled edge structure 24. FIG. 6 shows yet another schematic block diagram of a device 30 for manufacturing a battery cell 20 according to an embodiment of the present application, where the device 30 shown in FIG. 6 may also be configured to manufacture the battery cells as shown in FIG. 2 and FIG. 3. As shown in FIG. 6, compared with FIG. 4 or FIG. 5, the device 30 provided by the embodiment of the present application may further include a second roller 36 having a second processing surface 361, where the roller moving mechanism 33 is further configured to control the second roller 36 to move in the direction of the central axis 201 of the battery cell 20; and the second roller 36 is configured to squeeze and wind, when the roller moving mechanism 33 controls the second roller 36 to move in the direction of the central axis 201 of the battery cell 20, a first edge portion 221 of the cover plate 22 and a second edge portion 211 of the case 21 by the second processing surface 361, to form the rolled edge structure 24. According to the device 30 provided by the embodiment of the present application, the rolled edge structure 24 can be formed through winding under the squeezing of the second roller 36, and this process is simple and easy to implement.

Optionally, as shown in FIG. 6, the device 30 may include a second press head 35 in contact with a first surface 231 of the stiffener 23, where the first surface 231 is a surface, facing the rolled edge structure 24, of the stiffener 23, and the second press head 35 is configured to restrict the relative movement between the stiffener 23 and the cover plate 22. Further, the second press head may also be configured to cooperate with the second roller 36, to form the rolled edge structure 24 between the second processing surface 361 and the second press head 35.

Optionally, the device 30 further includes a press head moving mechanism 37, configured to control, before the case 21 and the cover plate 22 form the rolled edge structure 24, the second press head 35 to squeeze the stiffener 23 towards the interior of the battery cell 20 along the direction of the central axis 201 of the battery cell 20, such that at least part of the cover plate 22 is accommodated in the opening of the case 21, and the first edge portion 221 is in contact with the second edge portion 211. Further, the press head moving mechanism 37 may also be configured to control the first press head 31 and the second press head 35 to jointly squeeze the stiffener 23 towards the interior of the battery cell 20 along the direction of the central axis 201 of the battery cell 20. In this way, the first press head 31 and/or the second press head 35 may be configured to not only restrict the movement of the stiffener 23, but also squeeze the cover plate 22, to cause the first edge portion 221 of the cover plate 22 to be quickly merged with the second edge portion 221 of the case 21, which contributes to accelerating the formation of the rolled edge structure 24.

Optionally, relative positions of the components included in the device 30 and the battery cell 20 in the embodiment of the present application can be set according to practical application, and due to different settings of the relative positions of the components of the device 30 and the battery cell 20, rotation and movement directions of the components of the device 30 may also be flexibly adjusted. The device 30 provided by the embodiment of the present application will be described in detail below with reference to the accompanying drawings.

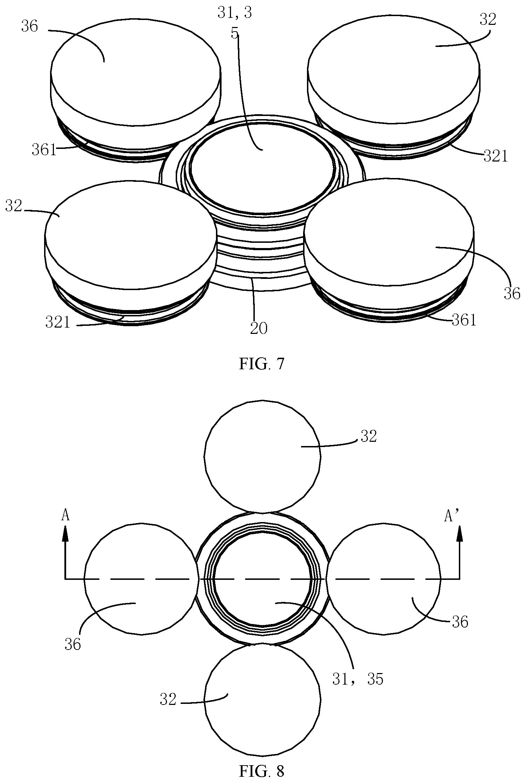

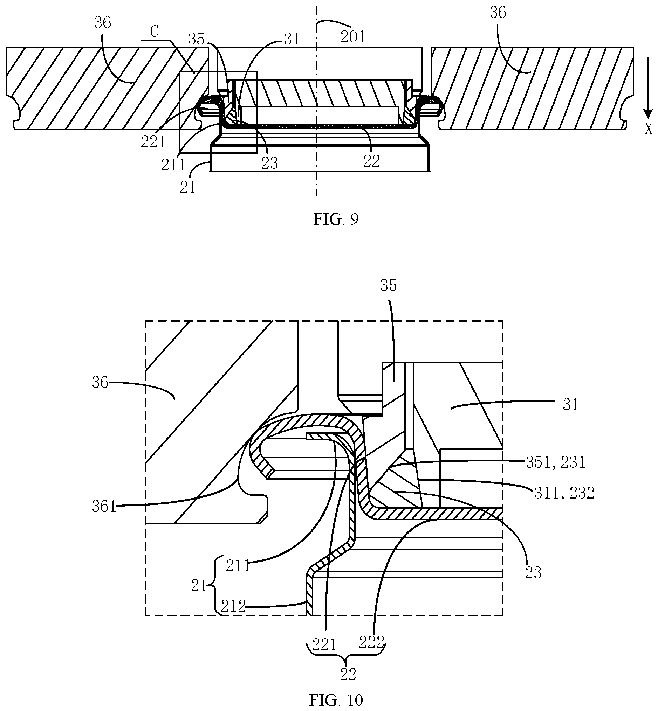

Firstly, with reference to the accompanying drawings, the device 30 provided by the embodiment of the present application is described for a preliminary formation process of the rolled edge structure 24, that is, for a first winding and sealing process of the battery cell 20. FIG. 7 shows a schematic partial structural diagram of a rolled edge structure 24 of a battery cell 20 processed by a device 30 according to an embodiment of the present application, where the FIG. 7 only shows part of the battery cell 20. FIG. 8 shows a schematic partial top view of a rolled edge structure 24 of a battery cell 20 processed by a device 30 according to an embodiment of the present application, where the FIG. 8 may be a schematic top view of FIG. 7. FIG. 9 shows a schematic diagram of a partial section of a rolled edge structure 24 of a battery cell 20 processed by a device 30 according to an embodiment of the present application, where the section may be a schematic diagram of a section along a direction A-A' shown in FIG. 8. FIG. 10 shows a schematic partial sectional view of a rolled edge structure 24 of a battery cell 20 processed by a device 30 according to an embodiment of the present application, where the FIG. 10 may be an enlarged view of a region C in FIG. 9.

As shown in FIG. 7 to FIG. 10, the cover plate 22 in the embodiment of the present application includes the first edge portion 221 located in an edge region and the cover plate main body portion 222 located in a central region, the first edge portion 221 surrounding the cover plate main body portion 22; and the case 21 includes the second edge portion 211 and a case main body portion 212, the second edge portion 211 being a region, close to the opening of the case 21, of the case 21. The second edge portion 211 and the first edge portion 221 are configured to be wound to form the rolled edge structure 24. Compared with other means of sealing the case 21 and the cover plate 22, the rolled edge structure 24 formed by means of winding facilitates the processing, improves the processing efficiency of the battery cell 20, and can ensure the sealing performance of the case 21 and the cover plate 22.

It should be understood that a winding direction of the rolled edge structure 24 formed in the embodiment of the present application may be an anticlockwise direction, that is, the first edge portion 221 and the second edge portion 211 are merged and then bent and wound in a direction away from the central axis 201 of the battery cell 20; alternatively, in contrast, a winding direction of the winding structure 24 may be a clockwise direction, that is, the first edge portion 221 and the second edge portion 211 are merged and then bent and wound in the direction close to the central axis 201 of the battery cell 20, but the embodiment of the present application is not limited thereto. For ease of description, the anticlockwise direction shown in FIG. 8 is used as an example for description in the embodiment of the present application.

Correspondingly, as shown in FIG. 7 to FIG. 10, the second roller 36 is located on an outer side of the battery cell 20, such that the second processing surface 362 of the second roller 36 causes the battery cell 20 to form a rolled edge structure 24 that is wound anticlockwise. In the embodiment of the present application, the battery cell 20 is provided with the stiffener 23, and the second roller 36 is located on the outer side of the battery cell 20 to form the rolled edge structure 24 that is wound anticlockwise, such that an arrangement position of the stiffener 23 is not affected, and the stiffener 23 does not need to be moved continuously in different processing procedures, thereby improving the processing efficiency.

Specifically, as shown in FIG. 7 to FIG. 10, the stiffener 23 is arranged on one side, away from the interior of the battery cell 20, of the cover plate 22, and the first press head 31 and the second press head 35 are controlled by the press head moving mechanism 37 to move towards the interior of the battery cell 20 along the direction of the central axis 201 of the battery cell 20, that is, the first press head 31 and the second press head 35 are controlled by the press head moving mechanism 37 to move in a direction X as shown in FIG. 9, to cause the first press head 31 and the second press head 35 to be in contact with the stiffener 23.

Optionally, a shape of the stiffener 23 in the embodiment of the present application can be set according to practical application. For example, the shape of the stiffener 23 is related to a shape of the rolled edge structure 24. By using the cylindrical battery cell 20 as an example, if the rolled edge structure 24 surrounds the opening of the case 21, that is, the rolled edge structure 24 is a circular ring, an external contour of the stiffener 23 may also be circular to match with the rolled edge structure 24. Alternatively, if the battery cell 20 is a cuboid and the rolled edge structure 24 surrounds the opening of the case 21, the rolled edge structure 24 is a rectangular ring, and correspondingly, an external contour of the stiffener 23 may also be rectangular. For another example, the stiffener 23 may be annular, such that the processing is facilitated, and the weight of the stiffener 23 can be reduced to reduce the overall weight of the battery cell 20, namely, to reduce the weight of the battery 10; and it is also convenient for the first press head 31 to fix the stiffener 23.

An example where the stiffener 23 is annular is used in the embodiment of the present application, the first press head 31 is arranged on an inner side of the stiffener 23, such that the first press head 31 is in contact with a second surface 232, close to the central axis 201 of the battery cell 20, of the stiffener 23. Specifically, as shown in FIG. 7 to FIG. 10, the first press head 31 has a first end surface 311 which is an outer surface of the first press head 31. When the first press head 31 moves along the direction X, the first end surface 311 is in contact with the second surface 232 of the stiffener 23, such that the stiffener 23 can be fixed by the first end surface 311 to restrict the movement of the stiffener 23 along the first plane perpendicular to the central axis 201 of the battery cell 20.

The second press head 35 can be in contact with the first surface 231 of the stiffener 23. Specifically, as shown in FIG. 10 in FIG. 7, the second press head 35 has a second end surface 351. When the second press head 35 moves along the direction X, the second end surface 351 is in contact with the first surface 231. The first surface 231 is opposite to the second surface 232, where the second surface 231 is a surface, away from the central axis 201 of the battery cell 20, of the stiffener 23.

In this way, the movement of the stiffener 23 can be restricted by the first press head 31 and the second press head 35, that is, the relative movement between the stiffener 23 and the cover plate 22 can be restricted, to avoid affecting the processing of the rolled edge structure 24 due to the dislocation.

Optionally, due to the contact between the first end surface 311 and the second surface 232, an inclination angle of the first end surface 311 can be basically kept consistent with that of the second surface 232 and can be set to be any value according to practical application. For example, an angle between the surface 311, in contact with the stiffener 23, of the first press head 31 and the central axis 201 of the battery cell 20 ranges from 0° to 10°, that is, an angle between the first end surface 311 and the central axis 201 of the battery cell 20 ranges from 0° to 10°, and correspondingly, an angle between the second surface 232 and the central axis 201 of the battery cell 20 may also range from 0° to 10°, to improve the stability of the first press head 31 and the stiffener 23.

Similarly, due to the contact between the second end surface 352 and the first surface 231, an inclination angle of the second end surface 352 can be basically kept consistent with that of the first surface 231, to improve the stability between the second end surface 352 and the first surface 231; moreover, the inclination angle can also be set to be any value according to practical application. For example, an angle between the first surface 231 and the central axis 201 of the battery cell 20 can be generally set to be greater than 0° and less than 90°, and correspondingly, an angle between the second end surface 352 and the central axis 201 of the battery cell 20 can also be set to be greater than 0° and less than 90°; and further, to improve the structural strength and stability of the stiffener 23, an angle between the first surface 231 and the central axis 201 of the battery cell 20 can be set be greater than or equal to 30° and less than 90°, and correspondingly, an angle between the second end surface 352 and the central axis 201 of the battery cell 20 can also be set to be greater than or equal to 30° and less than 90°, but the embodiment of the present application is not limited thereto.

In the embodiment of the present application, as shown in FIG. 7 to FIG. 10, before the case 21 and the cover plate 22 form the rolled edge structure 24, the press head moving mechanism 37 can further continue to control the first press head 31 and the second press head 35 to squeeze the stiffener 23 towards the interior of the battery cell 20 along the direction of the central axis 201 of the battery cell 20, such that at least part of the cover plate 22 is accommodated in the opening of the case 21, and the first edge portion 221 of the cover plate 22 is in contact with the second edge portion 211 of the case 21. In this way, the first edge portion 221 can be merged with the second edge portion 222, thereby facilitating subsequent winding of the first edge portion 221 and the second edge portion 222 to form the rolled edge structure 24.

Specifically, as shown in FIG. 7 to FIG. 10, in the process of forming the rolled edge structure 24, when the roller moving mechanism 33 controls the second roller 36 to move in the direction of the central axis 201 of the battery cell 20, the first edge portion 221 of the cover plate 22 and the second edge portion 211 of the case 21 are squeezed and wound by the second processing surface 361, to form the rolled edge structure 24 between the second processing surface 361 and the second press head 35. This process is easy to implement, and the rolled edge structure 24 can be formed quickly.

Optionally, the roller rotating mechanism 34 is further configured to control the second roller 36 to rotate about the central axis 201 of the battery cell 20, to cause the first edge portion 221 and the second edge portion 211 to be uniformly stressed and deformed, so as to form a uniform rolled edge structure 24.

To increase a processing speed, the roller rotating mechanism 34 can be configured to control, when the roller moving mechanism 33 controls the second roller 36 to move in the direction of the central axis 201 of the battery cell 20, the second roller 36 to rotate about the central axis 201 of the battery cell 20, that is, to control the second roller 36 to rotate about the central axis 201 of the battery cell 20 while getting close to the central axis 201 of the battery cell 20, to accelerate the formation of the annular rolled edge structure 24 surrounding a circumference of the battery cell 20.

Optionally, the second processing surface 361 in the embodiment of the present application is an inner surface of a groove surrounding the second roller 36. Specifically, as shown in FIG. 7 to FIG. 10, the groove surrounding the second roller 36 is formed in an outer surface of the second roller 36, and the inner surface of the groove is the second processing surface 361 of the second roller 36, such that there is always the second processing surface 361 for squeezing and bending the first edge portion 221 and the second edge portion 211 in the process that the second roller 36 rotates about the central axis 201 of the battery cell 20, to form the rolled edge structure 24.

A shape of the second processing surface 361 in the embodiment of the present application can be set according to practical application, to facilitate the winding of the first edge portion 221 and the second edge portion 211 to form the rolled edge structure 24.

The device 30 provided by the embodiment of the present application may include one or more second rollers 36, each of which may be a cylinder. For example, as shown in FIG. 7 to FIG. 10, the device 30 may include two cylindrical second rollers 36, to improve the processing efficiency of the rolled edge structure 24. Moreover, when the device 30 includes multiple second rollers 36, the second rollers 36 can be uniformly distributed around an outer surface of the cylindrical battery cell 20 in a circumferential direction, such that the first edge portion 221 and the second edge portion 211 in different regions are stressed more uniformly. For example, as shown in FIG. 7 to FIG. 10, the device 30 may include two second rollers 36 arranged oppositely. In addition, the multiple second rollers 36 can move synchronously, that is, the multiple second rollers 36 can be controlled by the roller moving mechanism 33 to move synchronously; and similarly, the multiple second rollers 36 can also rotate synchronously, that is, the multiple second rollers 36 can be controlled by the roller rotating mechanism 34 to roll synchronously, thereby simplifying the device 30 and improving the processing efficiency of the rolled edge structure 24.

It should be understood that the second press head 35 and the second roller 36 in the embodiment of the present application can be configured to implement the winding of the case 21 and the cover plate 22, to preliminarily form the rolled edge structure 24, namely, to complete the first winding and sealing process of the battery cell 20. Optionally, in the embodiment of the present application, the rolled edge structure 24 may be formed through processing by other means instead of the second press head 35 and the second roller 36, but the embodiment of the present application is not limited thereto.

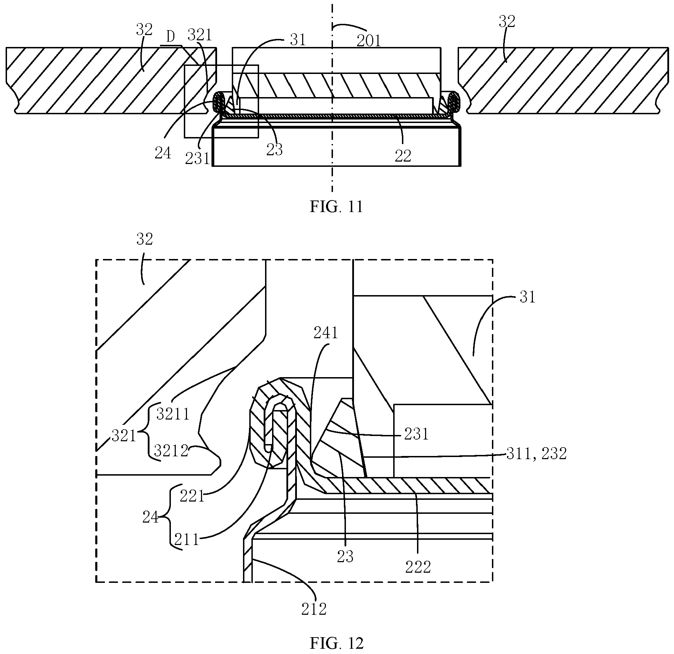

For a process of continuing processing the rolled edge structure 24, that is, for a second winding and sealing process of the battery cell 20, the device 30 provided by the embodiment of the present application will be described below with reference to the accompanying drawings. FIG. 11 shows a schematic diagram of a partial section of a rolled edge structure 24 of a battery cell 20 processed by a device 30 according to an embodiment of the present application, where the section may be a schematic diagram of a section along a plane passing through a central axis 201 of a battery cell 20, and the plane passing through the central axis 201 of the battery cell 20 is perpendicular to the section in FIG. 9. FIG. 12 shows a schematic partial sectional view of a rolled edge structure 24 of a battery cell 20 processed by a device 30 according to an embodiment of the present application, where the FIG. 12 may be an enlarged view of a region D in FIG. 11.

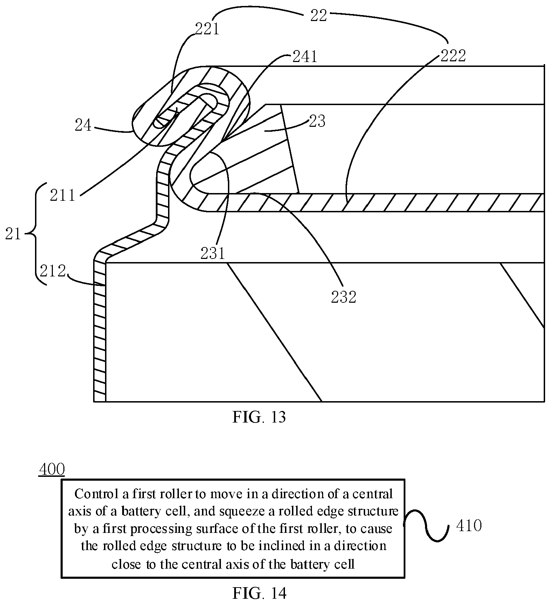

As shown in FIG. 11 and FIG. 12, after the first winding and sealing process, the rolled edge structure 24 as shown in the figure can be formed. Specifically, the number of winding layers of the first edge portion 221 and the second edge portion 211 can be set according to practical application. For example, if the number of winding layers of the rolled edge structure 24 is too large, it will result in large volume and weight of the rolled edge structure 24, which expands the space occupied by the battery cell 20, and increases the weight of the battery cell 20, namely, reduces the energy density of the battery 10. On the contrary, if the number of winding layers of the rolled edge structure 24 is too small, it may lead to the instability of the rolled edge structure 24 and a poor sealing effect. Therefore, the number of winding layers of the rolled edge structure 24 can be usually set to be five or six. For example, the rolled edge structure 24 as shown in FIG. 12 and FIG. 13 includes a total of five layers, where the rolled edge structure 24 includes three layers of first edge portions 221 and two layers of second edge portions 211, to ensure the sealing effect.

As shown in FIG. 11 and FIG. 12, compared with FIG. 9 and FIG. 10, the press head moving mechanism 37 is further configured to control, when the second press head 35 leaves the battery cell 20, the first press head 31 not to leave the battery cell 20. Specifically, after the first winding and sealing process, the press head moving mechanism 37 can control the first press head 31 to remain stationary, that is, the first end surface 311 of the first press head 31 and the second surface 232 of the stiffener 23 remain in a contact state, and then in the subsequent second winding and sealing process, the movement of the stiffener 23 continues being restricted by the first press head 31. Therefore, related description of the first press head 31 in the second winding and sealing process is consistent with that in the first winding and sealing process, and will not be repeated herein for simplicity.

In addition, the press head moving mechanism 37 controls the second press head 35 to leave the battery cell 20. For example, the second press head 35 can be controlled by the press head moving mechanism 37 to leave, along the direction of the central axis 201 of the battery cell 20, the stiffener 23, and also leave the battery cell 20, to avoid being in contact with the battery cell 20.

Therefore, the design of a dual-press head structure of the first press head 31 and the second press head 35 in the embodiment of the present application not only ensures a support effect of the two press heads on the formed rolled edge structure 24 and a fixation effect thereof on the stiffener 23 in the first winding and sealing process, but also provides a space for deformation of the rolled edge structure 24 in the second winding and sealing process. Moreover, a gap may be arranged between the first press head 31 and the second press head 35, to prevent an influence on the first press head 31 in the process that the second press head 35 leaves the battery cell 20, for example, to prevent an interference with the first press head 31.

After the first winding and sealing process, the roller moving mechanism 33 can also be configured to control the second roller 36 to leave the battery cell 20. For example, the roller moving mechanism 33 can control the second roller 36 to leave, along a direction perpendicular to the central axis 201 of the battery cell 20, the rolled edge structure 24 of the battery cell 20, and also leave the battery cell 20, to avoid being in contact with the battery cell 20. Moreover, the roller rotating mechanism 34 can also stop the rotation of the second roller 36.

It should be understood that after the first winding and sealing process, the second press head 35 and the second roller 36 leave the battery cell, and then the rolled edge structure 24 can enter the second winding and sealing process. The first press head 31 is in the second winding and sealing process.

Specifically, as shown in FIG. 11 and FIG. 12, similar to the second roller 32 in arrangement, the first roller 32 is located on one side, away from the central axis 201 of the battery cell 20, of the rolled edge structure 24. The stiffener 23 is arranged on one side, close to the central axis 201 of the battery cell 20, of the rolled edge structure 24, and the first roller 32 is arranged on the other side of the rolled edge structure 24, such that the first processing surface 321 of the first roller 32 can squeeze the rolled edge structure 24, to cause the rolled edge structure 24 to be in contact with the stiffener 23.

As shown in FIG. 11 and FIG. 12, the roller moving mechanism 33 controls the first roller 32 to gradually approach the central axis 201 of the battery cell 20. In this way, the first processing surface 321 is in contact with one side, away from the central axis 201 of the battery cell 20, of the rolled edge structure 24 and squeezes the rolled edge structure 24, to cause the rolled edge structure 24 to surface, that is, the surface 241 on one side, close to the central axis 201 of the battery cell 20, of the rolled edge structure 24 gradually approaches the first surface 231 of the stiffener 23 and is in contact with the first surface 231; moreover, the rolled edge structure 24 can also be compacted, to ensure the sealing effect of the rolled edge structure 24.

In the embodiment of the present application, the roller rotating mechanism 34 is configured to control the first roller 32 to rotate about the central axis 201 of the battery cell 20, to cause one side, away from the central axis 201 of the battery cell 20, of the annular rolled edge structure 24 to be uniformly stressed, so as to cause the rolled edge structure 24 to deform more uniformly.

Optionally, the roller rotating mechanism 34 can be specifically configured to control, when the roller moving mechanism 33 controls the first roller 32 to move in the direction of the central axis 201 of the battery cell 20, the first roller 32 to rotate about the central axis 201 of the battery cell 20, that is, to control the first roller 32 to rotate about the central axis 201 of the battery cell 20 while gradually getting close to the central axis 201 of the battery cell 20, to cause the first processing surface 321 to uniformly and quickly squeeze the regions of the annular rolled edge structure 24, thereby improving the processing efficiency.

Optionally, the first processing surface 321 is an inner surface of a groove surrounding the first roller 32. Specifically, as shown in FIG. 11 and FIG. 12, the groove surrounding the first roller 32 is formed in an outer surface of the first roller 32, and the inner surface of the groove is the first processing surface 321 of the first roller 32, such that there is always the first processing surface 321 for squeezing the rolled edge structure 24 in the process that the first roller 32 rotates about the central axis 201 of the battery cell 20.

Optionally, a shape of the first processing surface 321 in the embodiment of the present application can be set according to practical application, to facilitate the squeezing of the rolled edge structure 24. For example, the first processing surface 321 includes an inclined surface 3211 with an inclination direction consistent with that of the first surface 231 of the stiffener 23, where the first surface 231 is a surface, in contact with the rolled edge structure 24, of the stiffener 23. Specifically, the inclined surface 3211 of the first processing surface 321 makes contact with and squeezes the rolled edge structure 24, such that the rolled edge structure 24 can be compacted and also can be bent and deformed in a direction of the stiffener 23. The surface 241, facing the central axis 201 of the battery cell 20, of the rolled edge structure 24 will be in contact with the first surface 231 of the stiffener 23, until the second winding and sealing process is completed, to obtain the battery cell 20 as shown in FIG. 2 and FIG. 3, that is, at least part of the stiffener 23 of the battery cell 20 is located between the inner side of the rolled edge structure 24 and the cover plate 22.

FIG. 13 shows a schematic partial sectional view of a battery cell 20 according to an embodiment of the present application, for example, the FIG. 13 may be an enlarged view of a region Q of the battery cell 20 shown in FIG. 3. As shown in FIG. 13, after the second winding and sealing process, the surface 241 of the rolled edge structure 24 is in contact with the first surface 231 of the stiffener 23. Therefore, as shown in FIG. 11 and FIG. 12, the first processing surface 321 includes the inclined surface 3211 with the inclination direction consistent with that of the first surface 231, such that the rolled edge structure 24 in the second winding and sealing process can be uniformly stressed between the inclined surface 3211 and the first surface 231, and deforms more uniformly, thereby enhancing the strength of the rolled edge structure 24.

Optionally, the first processing surface 321 may further include an extension surface 3212 connected to the inclined surface 3211, where the extension surface 3212 can be configured to be in contact with part of the surface of the rolled edge structure 24, and when the rolled edge structure 24 is in contact with the extension surface 3212, the deformation of the rolled edge structure 24 towards the stiffener 23 is accelerated in cooperation with the inclined surface 3211.

The device 30 provided by the embodiment of the present application may include one or more first rollers 32, each of which may be a cylinder. For example, as shown in FIGS. 7 and 8 and FIGS. 11 and 12, similar to the second rollers 36, two first rollers 32 may be included in the device 30, to improve the processing efficiency of the rolled edge structure 24 in the second winding and sealing process. Moreover, when the device 30 includes multiple first rollers 32, the first rollers 32 can be uniformly distributed around the outer surface of the battery cell 20 in the circumferential direction, such that different regions of the rolled edge structure 24 can be stressed more uniformly. For example, as shown in FIGS. 7 and 8 and FIGS. 11 and 12, the device 30 may include two first rollers 32 arranged oppositely. In addition, the multiple first rollers 32 can move synchronously, that is, the multiple first rollers 32 can be controlled by the roller moving mechanism 33 to move synchronously; and similarly, the multiple first rollers 32 can also rotate synchronously, that is, the multiple first rollers 32 can be controlled by the roller rotating mechanism 34 to roll synchronously, thereby simplifying the device 30 and improving the processing efficiency of the rolled edge structure 24.

Optionally, if the device 30 includes multiple first rollers 32 and multiple second rollers 36, the number of the multiple first rollers 32 and the number of the multiple second rollers 36 can be set to be equal or unequal, and the multiple first rollers 32 and the multiple second rollers 36 can be arranged at intervals, but the embodiment of the present application is not limited thereto. For example, as shown in FIGS. 7 and 8 and FIGS. 11 and 12, an example where the device 30 includes two first rollers 32 and two rollers 36 is used in the embodiment of the present application, where the two first rollers 32 and the two rollers 36 can be arranged at intervals and uniformly distributed in the circumferential direction of the battery cell 20, thereby facilitating the operation and processing of the rolled edge structure 24 of the battery cell 20, and improving the processing efficiency.

Specifically, according to a difference between the first winding and sealing process and the second winding and sealing process, the roller moving mechanism 33 is further configured to control, when the second roller 36 is controlled to move to the second processing surface 361 to be in contact with the battery cell 20, the first roller 32 to move to the first processing surface 321 to avoid being in contact with the battery cell 20, so as to complete the first winding and sealing process of winding the first edge portion 221 and the second edge portion 211 to form the rolled edge structure 24 by the second processing surface 361; and the roller moving mechanism 33 is further configured to control, when the first roller 32 is controlled to move to the first processing surface 321 to be in contact with the battery cell 20, the second roller 36 to move to the second processing surface 361 to avoid being in contact with the battery cell 20, so as to complete the second winding and sealing process of squeezing the rolled edge structure 24 by the first processing surface 321 to deform and make contact with the first surface of the stiffener 23. The first roller 31 and the second roller 36 do not affect each other.

Optionally, as shown in FIGS. 7 and 8 and FIGS. 11 and 12, the roller rotating mechanism 34 is different from the roller moving mechanism 33. In the first winding and sealing process, the roller rotating mechanism 34 can synchronously control the first roller 31 to rotate when controlling the second roller 36 to rotate about the central axis 201 of the battery cell 20, while in the second winding and sealing process, the roller rotating mechanism 34 can synchronously control the second roller 36 to rotate when controlling the first roller 31 to rotate about the central axis 201 of the battery cell 20, thereby simplifying the design difficulty of the device 30 and the roller rotating mechanism 34.

As shown in FIG. 11 to FIG. 13, the rolled edge structure 24 is gradually squeezed by the first processing surface 321 to be bent in the direction of the central axis 201 of the battery cell 20, until the surface 241 of the rolled edge structure 24 is parallel to and in contact with the first surface 231 of the stiffener 23, thereby completing the processing and fixation of the rolled edge structure 24 and the stiffener 23. In this way, the cooperation between the first press head 31 and the first roller 32 of the device 30 can cause the rolled edge structure 24 to be compacted and can cause the surface 241 of the rolled edge structure 24 to be inclined relative to the central axis 201 of the battery cell 20, rather than to be parallel.

As a result, when the internal pressure of the battery cell 20 gradually increases, the cover plate 22 will deform under the internal pressure. For example, the cover plate main body portion 222 of the cover plate 22 will be arched towards the exterior of the battery cell 20. The arranged stiffener 23 will also change, that is, the stiffener 23 will be turned towards the exterior of the battery cell 20. The stiffener 23 can counteract most of the internal pressure to reduce the deformation of the cover plate 22, namely, to reduce the arching of the cover plate 22. In addition, when the stiffener 23 is turned outwards, the stiffener 23 will exert an action force on the rolled edge structure 24, and the action force increases a frictional force between the layers of the rolled edge structure 24, that is, a frictional force between the first edge structure 221 and the second edge structure 211, thereby preventing the failure caused by the dislocation between the case 21 and the cover plate 22, and enhancing the air tightness between the case 21 and the cover plate 22.

Moreover, the internal pressure of the battery cell 20 will first act on the stiffener 23, rather than directly acting on the rolled edge structure 24. Specifically, in a case where the stiffener 23 is arranged, during the process that the internal pressure of the battery cell 20 gradually increases, the stiffener 23 will fail only when the stiffener 23 is completely turned upwards under the internal pressure, that is, when the surface 231 of the stiffener 23 is turned outwards from an inclined state till the surface 231 of the stiffener 23 is parallel to the central axis 201 of the battery cell 20, and correspondingly, the rolled edge structure 23 will also fail due to direct bearing of the internal pressure. Therefore, whether the rolled edge structure 23 in the embodiment of the present application fails is related to the compressive strength of the stiffener 23, where the compressive strength of the stiffener 23 refers to a minimum internal pressure required when the stiffener 23 is completely turned upwards. In a case where the stiffener 23 is not arranged, whether the rolled edge structure 23 fails is only related to the compressive strength of the rolled edge structure 23 itself, where the compressive strength of the rolled edge structure 23 itself refers to a minimum internal pressure required for deformation failure of the rolled edge structure 23 when the internal pressure of the battery cell 20 directly acts on the rolled edge structure 23. So, when the compressive strength of the rolled edge structure 23 itself is same, compared with the case where the stiffener 23 is not arranged, whether the rolled edge structure 23 in the embodiment of the present application fails is related to the strength of the stiffener 23, such that the failure of the rolled edge structure 23 can be avoided by increasing the compressive strength of the stiffener 23.

Optionally, after the device 30 completes the processing of the rolled edge structure 24, the roller moving mechanism 33 is further configured to control the first roller 32 to gradually move away from the rolled edge structure 24 along the direction away from the central axis 201 of the battery cell 20; similarly, the roller rotating mechanism 34 may also be configured to control the first roller 32 and the second roller 36 to stop rotation; in addition, the press head moving mechanism 37 is further configured to control the first press head 31 to gradually move away from the component 23 along the direction of the central axis 201 of the battery cell 20, to cause the device 30 to leave the battery cell 20, so as to finish the processing of the rolled edge structure 24.

The device 30 for manufacturing a battery cell 20 according to an embodiment of the present application is described in detail above with reference to FIG. 1 to FIG. 13, and a method 400 for manufacturing a battery cell 20 according to an embodiment of the present application will be described below with reference to FIG. 14. FIG. 14 shows a schematic flowchart of a method 400 for manufacturing a battery cell 20 according to an embodiment of the present application. The method 400 can be executed by the foregoing device 30 and used for manufacturing the foregoing battery cell 20, where the battery cell 20 includes a case 21 and a cover plate 22 which are hermetically connected and form a rolled edge structure 24 turned outwards. Specifically, the method 400 includes: S410: controlling a first roller 32 to move in a direction of a central axis 201 of the battery cell 20, and squeezing the rolled edge structure 24 by a first processing surface 321 of the first roller 32, to cause the rolled edge structure 24 to be inclined in a direction close to the central axis 201 of the battery cell 20.

In some embodiments, the method 400 further includes: controlling the first roller 32 to rotate about the central axis 201 of the battery cell 20.

In some embodiments, the controlling the first roller 32 to rotate about the central axis 201 of the battery cell 20 includes: controlling, when the first roller 32 is controlled to move in the direction of the central axis 201 of the battery cell 20, the first roller 32 to rotate about the central axis 201 of the battery cell 20.

In some embodiments, the battery cell 20 further includes a stiffener 23 arranged on one side, away from an interior of the battery cell 20, of the cover plate 22; and the squeezing the rolled edge structure 24 by a first processing surface 321 of the first roller 32, to cause the rolled edge structure 24 to be inclined in a direction close to the central axis 201 of the battery cell 20 includes: squeezing the rolled edge structure 24 by the first processing surface 321 of the first roller 32, to cause the rolled edge structure 24 to be inclined in the direction close to the central axis 201 of the battery cell 20, and to cause at least part of the stiffener 23 to be located between an inner side of the rolled edge structure 24 and the cover plate 22.

In some embodiments, the method 400 further includes: restricting, by a first press head 31, the movement of the stiffener 23 of the battery cell 20 in a first plane perpendicular to the central axis 201 of the battery cell 20.

In some embodiments, the method 400 further includes: controlling a second roller 36 to move in the direction of the central axis 201 of the battery cell 20, and squeezing and winding a first edge portion 221 of the cover plate 22 and a second edge portion 211 of the case 21 by a second processing surface 361 of the second roller 36, to form the rolled edge structure 24.

In some embodiments, the method 400 further includes: enabling a second press head 35 to be in contact with a first surface 231 of the stiffener 23 of the battery cell 20, and restricting the relative movement between the stiffener 23 and the cover plate 22, where the stiffener 23 is arranged on one side, away from the interior of the battery cell 20, of the cover plate 22, and the first surface 231 is a surface, facing the rolled edge structure 24, of the stiffener 23.

In some embodiments, the method 400 further includes: controlling, before the case 21 and the cover plate 22 form the rolled edge structure 24, the second press head 35 to squeeze the stiffener 23 towards the interior of the battery cell 20 along the direction of the central axis 201 of the battery cell 20, such that at least partial region of the cover plate 22 is accommodated in an opening of the case 21, and the first edge portion 221 is in contact with the second edge portion 211.

In some embodiments, the method 400 further includes: controlling, after the rolled edge structure 24 is formed, the second press head 35 to leave the battery cell 20.

In some embodiments, the method 400 further includes: controlling the second roller 36 to rotate about the central axis 201 of the battery cell 20.

In some embodiments, the controlling the second roller 36 to rotate about the central axis 201 of the battery cell 20 includes: controlling, when the second roller 36 is controlled to move in the direction of the central axis 201 of the battery cell 20, the second roller 36 to rotate about the central axis 201 of the battery cell 20.

The method 400 further includes: controlling, when the first roller 32 is controlled to move till the first processing surface 321 is in contact with the battery cell 20, the second roller 36 to move till the second processing surface 361 is not in contact with the battery cell 20; and controlling, when the second roller 36 is controlled to move till the second processing surface 361 is in contact with the battery cell 20, the first roller 32 to move till the first processing surface 321 is not in contact with the battery cell 20.

It should be understood that the device 30 provided by the embodiment of the present application can be configured to execute the method 400 provided by the embodiment of the present application, and the method 400 includes corresponding steps of manufacturing the battery cell 20 by the device 30, and will not be repeated herein for simplicity.

Although the present application has been described with reference to preferred embodiments, various improvements can be made and components can be replaced with equivalents without departing from the scope of the present application. Most of all, on the premise of no structural conflict, the technical features mentioned in the embodiments can be combined in any way. The present application is not limited to particular embodiments disclosed herein, but includes all technical solutions falling within the scope of the claims.

## Claims

1. A device for manufacturing a battery cell, **characterized by**:
a roller moving mechanism (33), configured to control a first roller (32) to move in a direction of a central axis (201) of a battery cell (20), wherein the battery cell (20) comprises a case (21) and a cover plate (22), the case (21) and the cover plate (22) being hermetically connected and forming a rolled edge structure (24) that is turned outwards; and
the first roller (32), having a first processing surface (321) and configured to squeeze, when the roller moving mechanism (33) controls the first roller (32) to move in the direction of the central axis (201) of the battery cell (20), the rolled edge structure (24) by the first processing surface (321), to cause the rolled edge structure (24) to be inclined in a direction close to the central axis (201) of the battery cell (20).

2. The device according to claim 1, wherein the first roller (32) is located on one side, away from the central axis (201) of the battery cell (20), of the rolled edge structure (24).

3. The device according to claim 1 or 2, further comprising a roller rotating mechanism (34), configured to control the first roller (32) to rotate about the central axis (201) of the battery cell (20).

4. The device according to claim 3, wherein the roller rotating mechanism (34) is configured to control, when the roller moving mechanism (33) controls the first roller (32) to move in the direction of the central axis (201) of the battery cell (20), the first roller (32) to rotate about the central axis (201) of the battery cell (20).

5. The device according to any one of claims 1 to 4, wherein the first processing surface (321) is an inner surface of a groove surrounding the first roller (32).

6. The device according to any one of claims 1 to 5, wherein the battery cell (20) further comprises a stiffener (23) arranged on one side, away from an interior of the battery cell (20), of the cover plate (22); and the first roller (32) is configured to squeeze the rolled edge structure (24), to cause the rolled edge structure (24) to be inclined in the direction close to the central axis (201) of the battery cell (20), and to cause at least part of the stiffener (23) to be located between an inner side of the rolled edge structure (24) and the cover plate (22).

7. The device according to claim 6, wherein the first processing surface (321) comprises an inclined surface (3211) with an inclination direction consistent with that of a first surface (231) of the stiffener (23), the first surface (231) being a surface, in contact with the rolled edge structure (24), of the stiffener (23).

8. The device according to claim 6 or 7, further comprising a first press head (31), configured to restrict the movement of the stiffener (23) of the battery cell (20) in a first plane perpendicular to the central axis (201) of the battery cell (20).

9. The device according to claim 8, wherein the stiffener (23) is annular, and the first press head (31) is arranged on an inner side of the stiffener (23), such that the first press head (31) is in contact with a second surface (232), close to the central axis (201) of the battery cell (20), of the stiffener (23).

10. The device according to claim 9, wherein an angle between a surface (311), in contact with the stiffener (23), of the first press head (31) and the central axis (201) of the battery cell (20) ranges from 0° to 10°.

11. The device according to any one of claims 1 to 10, further comprising a second roller (36), having a second processing surface (361), wherein:
the roller moving mechanism (33) is further configured to control the second roller (36) to move in the direction of the central axis (201) of the battery cell (20); and
the second roller (36) is configured to squeeze and wind, when the roller moving mechanism (33) controls the second roller (36) to move in the direction of the central axis (201) of the battery cell (20), a first edge portion (221) of the cover plate (22) and a second edge portion (211) of the case (21) by the second processing surface (361), to form the rolled edge structure (24).

12. The device according to claim 11, further comprising a second press head (35) in contact with a first surface (231) of the stiffener (23) of the battery cell (20), wherein:
the stiffener (23) is arranged on one side, away from the interior of the battery cell (20), of the cover plate (22);
the first surface (231) is a surface, facing the rolled edge structure (24), of the stiffener (23); and
the second press head (35) is configured to restrict the relative movement between the stiffener (23) and the cover plate (22).

13. The device according to claim 12, further comprising a press head moving mechanism (37), configured to control, before the case (21) and the cover plate (22) form the rolled edge structure (24), the second press head (35) to squeeze the stiffener (23) towards the interior of the battery cell (20) in the direction of the central axis (201) of the battery cell (20), such that at least part of the cover plate (22) is accommodated in an opening of the case (21), and the first edge portion (221) is in contact with the second edge portion (211).

14. The device according to claim 13, wherein the press head moving mechanism (37) is further configured to control, when controlling the second press head (35) to leave the battery cell (20), the first press head (31) of the device not to leave the battery cell (20).

15. The device according to any one of claims 11 to 14, wherein the second roller (36) is located on an outer side of the battery cell (20).

16. The device according to any one of claims 11 to 15, wherein the roller rotating mechanism (34) is further configured to control the second roller (36) to rotate about the central axis (201) of the battery cell (20).

17. The device according to claim 16, wherein the roller rotating mechanism (34) is configured to control, when the roller moving mechanism (33) controls the second roller (36) to move in the direction of the central axis (201) of the battery cell (20), the second roller (36) to rotate about the central axis (201) of the battery cell (20).

18. The device according to any one of claims 11 to 17, wherein the roller moving mechanism (33) is further configured to:
control, when controlling the first roller (32) to move till the first processing surface (321) is in contact with the battery cell (20), the second roller (36) to move till the second processing surface (361) is not in contact with the battery cell (20); and
control, when controlling the second roller (36) to move till the second processing surface (361) is in contact with the battery cell (20), the first roller (32) to move till the first processing surface (321) is not in contact with the battery cell (20).

19. The device according to any one of claims 11 to 18, wherein the second processing surface (361) is an inner surface of a groove surrounding the second roller (36).

20. The device according to any one of claims 1 to 19, wherein the battery cell (20) is a cylinder, and the first roller (32) is a cylinder.

21. The device according to claim 20, wherein the device comprises a plurality of first rollers (32) uniformly distributed along a circumferential direction of the battery cell (20).

22. A method for manufacturing a battery cell, **characterized in that**:
the battery cell (20) comprises a case (21) and a cover plate (22), the case (21) and the cover plate (22) being hermetically connected and forming a rolled edge structure (24) that is turned outwards; and
the method comprises:
controlling a first roller (32) to move in a direction of a central axis (201) of the battery cell (20); and
squeezing the rolled edge structure (24) by a first processing surface (321) of the first roller (32), to cause the rolled edge structure (24) to be inclined in a direction close to the central axis (201) of the battery cell (20).

23. The method according to claim 22, further comprising:
controlling the first roller (32) to rotate about the central axis (201) of the battery cell (20).

24. The method according to claim 23, wherein the controlling the first roller (32) to rotate about the central axis (201) of the battery cell (20) comprises:
controlling, when controlling the first roller (32) to move in the direction of the central axis (201) of the battery cell (20), the first roller (32) to rotate about the central axis (201) of the battery cell (20).

25. The method according to any one of claims 22 to 24, wherein the battery cell (20) further comprises a stiffener (23) arranged on one side, away from an interior of the battery cell (20), of the cover plate (22); and
the squeezing the rolled edge structure (24) by a first processing surface (321) of the first roller (32), to cause the rolled edge structure (24) to be inclined in a direction close to the central axis (201) of the battery cell (20) comprises:
squeezing the rolled edge structure (24) by the first processing surface (321) of the first roller (32), to cause the rolled edge structure (24) to be inclined in the direction close to the central axis (201) of the battery cell (20), and to cause at least part of the stiffener (23) to be located between an inner side of the rolled edge structure (24) and the cover plate (22).

26. The method according to claim 25, further comprising:
restricting, by a first press head (31), the movement of the stiffener (23) of the battery cell (20) in a first plane perpendicular to the central axis (201) of the battery cell (20).

27. The method according to any one of claims 22 to 26, further comprising:
controlling a second roller (36) to move in the direction of the central axis (201) of the battery cell (20); and
squeezing and winding a first edge portion (221) of the cover plate (22) and a second edge portion (211) of the case (21) by a second processing surface (361) of the second roller (36), to form the rolled edge structure (24).

28. The method according to claim 27, further comprising:
enabling a second press head (35) to be in contact with a first surface (231) of the stiffener (23) of the battery cell (20); and
restricting the relative movement between the stiffener (23) and the cover plate (22),
wherein the stiffener (23) is arranged on one side, away from the interior of the battery cell (20), of the cover plate (22), and the first surface (231) is a surface, facing the rolled edge structure (24), of the stiffener (23).

29. The method according to claim 28, further comprising:
controlling, before the case (21) and the cover plate (22) form the rolled edge structure (24), the second press head (35) to squeeze the stiffener (23) towards the interior of the battery cell (20) along the direction of the central axis (201) of the battery cell (20), such that at least part of the cover plate (22) is accommodated in an opening of the case (21), and the first edge portion (221) is in contact with the second edge portion (211).

30. The method according to claim 28 or 29, further comprising:
controlling, when controlling the second press head (35) to leave the battery cell (20), the first press head (31) of the device not to leave the battery cell (20).

31. The method according to any one of claims 27 to 30, further comprising:
controlling the second roller (36) to rotate about the central axis (201) of the battery cell (20).

32. The method according to claim 31, wherein the controlling the second roller (36) to rotate about the central axis (201) of the battery cell (20) comprises:
controlling, when controlling the second roller (36) to move in the direction of the central axis (201) of the battery cell (20), the second roller (36) to rotate about the central axis (201) of the battery cell (20).

33. The method according to any one of claims 27 to 32, further comprising:
controlling, when controlling the first roller (32) to move till the first processing surface (321) is in contact with the battery cell (20), the second roller (36) to move till the second processing surface (361) is not in contact with the battery cell (20); and
controlling, when controlling the second roller (36) to move till the second processing surface (361) is in contact with the battery cell (20), the first roller (32) to move till the first processing surface (321) is not in contact with the battery cell (20).
